# EUROPÄISCHE PATENTSCHRIFT

(11) **EP 2 675 608 B1**
(45) Veröffentlichungstag und Bekanntmachung des Hinweises auf die Patenterteilung: **19.08.2015**
(21) Anmeldenummer: 12732511.6
(22) Anmeldetag: 18.01.2012
(51) Int. Cl.: B29C 65/02, B29C 53/46, B29C 65/12

(54) **VORRICHTUNG ZUM SCHWEIßEN EINER ROHRFÖRMIGEN AUSKLEIDUNG EINES ABWASSERROHRS**
DEVICE FOR WELDING A TUBULAR LINING OF A WASTEWATER PIPE
INSTALLATION DE SOUDAGE D'UN REVETEMENT TUBULAIRE POUR UNE CONDUITE D'EAUX USEES

(30) Priorität: 18.02.2011 AT 2182011
(43) Veröffentlichungstag der Anmeldung: 25.12.2013
(73) Patentinhaber: Schlüsselbauer, Johann, 4674 Altenhof am Hausruck (AT)
(72) Erfinder: Schlüsselbauer, Johann, 4674 Altenhof am Hausruck (AT)
(74) Vertreter: Patentanwaltskanzlei Hübscher
(86) Internationale Anmeldenummer: PCT/AT2012/050010
(87) Internationale Veröffentlichungsnummer: WO 2012/109688

(56) Entgegenhaltungen:
- DE-U1- 9 214 574
- DE-U1- 29 617 164
- DE-U1-202007 012 262
- US-A1- 2008 190 550

## Beschreibung

### Technisches Gebiet

Die Erfindung bezieht sich auf eine Vorrichtung zum Schweißen einer rohrförmigen Auskleidung eines Abwasserrohrs mit einer Halterung für die zu verschweißenden, stumpf stoßenden Längsränder einer zu einem Rohr gebogenen Kunststofftafel und mit einer Schweißeinrichtung.

### Stand der Technik

Um insbesondere bei chemisch belasteten Abwässern einen wirksamen Korrosionsschutz für Abwasserrohre aus Beton zu erreichen, ist es bekannt, die Abwasserrohre mit einer Innenauskleidung aus einem gegen solche chemischen Angriffe resistenten Kunststoff, beispielsweise Polyethylen, zu versehen. Zu diesem Zweck wird zunächst ein Rohr aus einer rechteckigen Kunststofftafel gefertigt, wobei die stumpf aneinander anliegenden Längsränder der zu einem Rohr gebogen Kunststofftafel miteinander verschweißt werden. Das Kunststoffrohr dient dann als verlorene Schalung für das in einer Form mit dem Kunststoffrohr als Kern zu gießende Betonrohr. Besonders aufwendig ist in diesem Zusammenhang die Fertigung des die spätere Innenauskleidung des Abwasserrohrs bildenden Kunststoffrohrs, weil die Längsränder der zu einem Rohr gebogenen Kunststofftafel für das anschließende Schweißen genau gefügt und während des Schweißvorgangs in der Fügestellung festgehalten werden müssen, was bei der üblichen Handfertigung dieser Kunststoffrohre erhebliche Schwierigkeiten macht.

Zum Herstellen von Rohrkörpern sind allerdings auch Schweißvorrichtungen bekannt (DE 296 17 164 U1, DE 92 14 574 U1), die eine Halterung für die zu verschweißenden, stumpf stoßenden Längsränder einer mit Hilfe einer aufwendigen Biegeeinrichtung zu einem Rohr gebogenen Kunststofftafel bilden. Die Halterung umfasst für jeden der beiden Längsränder der Kunststofftafel einen Spanntisch mit einer gegen den Spanntisch andrückbaren Klemmleiste, wobei die beiden Spanntische, die einander bezüglich des Stoßes zwischen den beiden Längsrändern unter Freilassung eines Spalts gegenüberliegen, zusammen mit den zugehörigen Klemmleisten senkrecht zum Stoß der Längsränder verlagert werden können. Zum Verschweißen der Längsränder der Kundzdzofftafel dient ein in den Spalt zwischen den Spanntischen einführbares Heizschwert.

### Darstellung der Erfindung

Der Erfindung liegt somit die Aufgabe zugrunde, eine Vorrichtung zu schaffen, mit deren Hilfe das Fügen und das anschließende Schweißen der stumpf stoßenden Längsränder einer zu einem Rohr gebogenen Kunststoffplatte erheblich erleichtert werden können.

Ausgehend von einer Vorrichtung der eingangs geschilderten Art löst die Erfindung die gestellte Aufgabe dadurch, dass die Halterung für die beiden stumpf stoßenden Längsränder der Kunststofftafel je eine Klemmeinrichtung aus einer feststehenden Klemmleiste auf der Rohraußenseite und einer an einen Stelltrieb angeschlossenen, beweglichen Klemmleiste auf der Rohrinnenseite umfasst, dass die feststehenden Klemmleisten einander bezüglich des Stoßes zwischen den beiden Längsrändern unter Freilassung eines Spaltes gegenüberliegen, dass zumindest eine der beiden beweglichen Klemmleisten in einer gegen die zugehörige feststehende Klemmleiste angestellten Stellung einen Anschlag für einen Längsrand der Kunststofftafel bildet und dass für die Schweißeinrichtung eine Führung entlang des Spaltes zwischen den feststehenden Klemmleisten vorgesehen ist.

Durch die beiden Klemmeinrichtungen können die stumpf aneinanderstoßenden Längsränder der zu einem Rohr gebogenen Kunststofftafel für den Schweißvorgang in ihrer gegenseitigen Lage festgehalten werden, sodass der Schweißvorgang mit Hilfe der Schweißeinrichtung einfach und genau durchgeführt werden kann, die dabei entlang des Spaltes zwischen den feststehenden Klemmleisten verschoben wird, wobei in an sich bekannter Weise Schweißmaterial, vorzugsweise in Strangform, in den Spalt zwischen den Klemmleisten eingebracht wird. Voraussetzung für eine schweißgerechte Klemmung der miteinander zu verschweißenden Längsränder der Kunststofftafel ist allerdings, dass für die beiden Längsränder ein vorgegebener Stoßverlauf mit hoher Genauigkeit eingehalten werden kann. Zu diesem Zweck ist für einen der beiden Längsränder der Kunststofftafel ein Anschlag vorgesehen, der durch die bewegliche Klemmleiste der nicht diesem Längsrand zugeordneten Klemmeinrichtung gebildet wird, indem diese den Anschlag bildende bewegliche Klemmleiste über ihren Stelltrieb an die zugehörige, feststehende Klemmleiste angedrückt wird, sodass der durch die offene Klemmeinrichtung gegen die gegenüberliegende Klemmeinrichtung vorgeschobene Längsrand an der geschlossenen, beweglichen Klemmleiste dieser gegenüberliegenden Klemmeinrichtung anschlägt und in dieser Anschlaglage mit Hilfe der zugehörigen Klemmeinrichtung festgehalten werden kann. Nach der Klemmung des einen Längsrandes kann der gegenüberliegende Längsrand durch die hiefür geöffnete, zugehörige Klemmeinrichtung hindurch stumpf stoßend an den geklemmten Längsrand der Kunststofftafel angedrückt werden, um in dieser Schweißstellung ebenfalls geklemmt zu werden. Mit der Klemmung der beiden Längsränder in der stumpf stoßend gefügten Schweißstellung werden alle Voraussetzungen für eine ordnungsgemäße Schweißung der beiden Längsränder erfüllt.

Die beweglichen Klemmleisten der beiden Klemmeinrichtungen befinden sich innerhalb des von der gebogenen Kunststofftafel gebildeten Rohrs. Dies bedeutet, dass das geschweißte Rohr nur in axialer Richtung aus den Klemmeinrichtungen abgezogen werden kann. Um ein solches axiales Abziehen des geschweißten Rohrs sicherzustellen, können die beweglichen Klemmleisten mit ihren Stelltrieben auf einem zu den feststehenden Klemmleisten parallelen, frei auskragenden Träger angeordnet sein. Bei größeren axialen Längen der Kunststofftafeln zur Herstellung rohrförmiger Auskleidungen für Abwasserrohre kann die Biegebeanspruchung eines solchen frei auskragenden Trägers erheblich sein. Um solche Biegebelastungen gut aufnehmen zu können, kann für das freie Ende des auskragenden Trägers eine lösbare Stützeinrichtung vorgesehen sein, die für eine beidseitige Lagerung des Trägers während der Klemmung und Schweißung der Längsränder der Kunststofftafel sorgt. Die Lösbarkeit dieser Stützeinrichtung für das freie Trägerende ist Voraussetzung für das axiale Abziehen der geschweißten, rohrförmigen Auskleidung.

Im einfachsten Fall können die Kunststofftafeln zur Herstellung der rohrförmigen Auskleidungen von Hand aus mit ihren Längsrändern in die zugehörigen Klemmeinrichtungen eingeführt werden. Wegen der Klemmung zunächst nur des einen Längsrandes macht es im Allgemeinen keine Schwierigkeiten, die einseitig entlang eines Längsrandes geklemmten Kunststofftafeln von Hand aus zu einem Rohr zu biegen und den gegenüberliegenden Längsrand in die zugehörige Klemmeinrichtung einzuführen. Damit die Herstellung der rohrförmigen Auskleidungen als verlorene Schalung für Abwasserrohre aus Beton weitgehend automatisiert werden kann, kann den beiden Klemmeinrichtungen je eine Umlenkführung für die zu einem Rohr zu biegende Kunststofftafel zugeordnet werden, wobei die Umlenkführung, die der Klemmeinrichtung mit dem Anschlag für einen Längsrand der Kunststofftafel zugehört, auf einem quer zu den beiden Umlenkführungen verfahrbaren Wagen vorgesehen ist, der einen der Umlenkführung des Wagens vorgelagerten, zwischen einer Ruhestellung und einer Mitnehmerstellung verlagerbaren Mitnehmeranschlag für die Kunststofftafel aufweist. Wird eine für die Herstellung einer rohrförmigen Auskleidung vorbereitete Kunststofftafel auf den hiefür vorgesehenen Wagen aufgebracht, so kann diese ebene Kunststofftafel über den Mitnehmeranschlag beim Einfahren des Wagens in die Vorrichtung gegen die nicht dem Wagen zugehörige Umlenkführung gefördert und entlang dieser Umlenkführung um 180° umgebogen werden, um durch die dieser Umlenkführung zugeordnete geöffnete Klemmeinrichtung gegen die gegenüberliegende, geschlossene Klemmeinrichtung bis auf Anschlag an deren Klemmleiste vorgeschoben werden, sodass der an den durch diese geschlossene Klemmleiste gebildeten Anschlag anliegende Längsrand der Kunststofftafel durch ein Schließen der diesem Längsrand zugehörigen Klemmeinrichtung festgehalten wird. Der Wagen kann dann nach einer Verlagerung des Mitnehmeranschlags aus seiner Mitnehmerstellung in eine Ruhestellung weiter in die Vorrichtung eingefahren werden, wobei die dem Wagen zugehörige Umlenkführung zum Einsatz kommt. Da die Kunststofftafel bereits entlang des einen Längsrandes festgehalten wird und sich an der dieser Klemmeinrichtung zugehörigen Umlenkführung abstützt, ergibt sich zwischen dem Wagen und der einseitig eingerollten Kunststofftafel eine Relativbewegung, die das Einrollen der Kunststofftafel im Bereich der dem Wagen zugehörigen Umlenkführung bedingt. Aufgrund der Öffnung der den Anschlag für den bereits geklemmten Längsrand bildenden Klemmeinrichtung wird der durch die Umlenkführung des Wagens um 180° umgelenkte Längsrand der Kunststofftafel durch die zugehörige offene Klemmeinrichtung gegen den festgeklemmten Längsrand bis auf Anschlag vorgeschoben. Es kann somit auch der zweite Längsrand in der durch diese Anschlagstellung bedingten Fügelage festgeklemmt werden, um die Schweißung vorzunehmen.

Damit unterschiedliche Umfangslängen für die rohrförmige Auskleidung und damit unterschiedliche Durchmesser dieser Auskleidung berücksichtigt werden können, ist es notwendig, ausreichend Raum für die Aufnahme der zu einem Rohr gebogenen Kunststofftafel vorzusehen. Der in die Vorrichtung einfahrbare Wagen beschränkt das Platzangebot für die Aufnahme der rohrförmig gebogenen Kunststofftafel der Höhe nach. Dies bedeutet, dass für größere Umfangslängen Platz in Fahrtrichtung des Wagens geschaffen werden muss. Zu diesem Zweck kann die der Umlenkführung des Wagens gegenüberliegende Umlenkführung quer zur zugehörigen Klemmeinrichtung verlagerbar sein, sodass diese Umlenkführung zwar eine für das Einrollen des noch nicht eingerollten Längsrandes erforderliche Abstützung für die einseitig eingerollte Kunststofftafel bildet, diese Abstützung aber an die jeweilige Umfangslänge der herzustellenden, rohrförmigen Auskleidung angepasst werden kann.

Kunststofftafeln, die zur Fertigung von Innenauskleidungen für Abwasserrohre dienen, weisen im Allgemeinen auf der späteren Außenseite der Außenkleidung eine Struktur in Form von Ansätzen oder Noppen auf, um eine innige Verbindung zwischen der Auskleidung und dem Betonrohr zu erreichen. Eine solche Oberflächenstrukturierung behindert jedoch den Schweißvorgang. Aus diesem Grunde kann der Schweißeinrichtung eine Fräseinrichtung vorgeordnet werden, mit deren Hilfe die Ansätze und Noppen im Bereich der Schweißnaht im Spalt zwischen den beiden feststehenden Klemmleisten spanend abgetragen werden können.

### Kurze Beschreibung der Zeichnung

In der Zeichnung ist der Erfindungsgegenstand beispielsweise dargestellt. Es zeigen
- Fig. 1: eine erfindungsgemäße Vorrichtung zum Schweißen einer rohrförmigen Auskleidung eines Abwasserrohrs in einer vereinfachten Seitenansicht,
- Fig. 2: diese Vorrichtung in einem Schnitt nach der Linie II-II der Fig.1 in einem größeren Maßstab,
- Fig. 3: einen Schnitt nach der Linie III-III der Fig. 2 mit einer einseitig eingerollten und eingespannten Kunststofftafel,
- Fig. 4: eine der Fig. 3 entsprechende Darstellung mit einer im Bereich beider Längsränder eingespannten Kunststofftafel und
- Fig. 5: eine zum Teil aufgerissene Ansicht der Vorrichtung in Richtung des Pfeils V der Fig. 1.

### Weg zur Ausführung der Erfindung

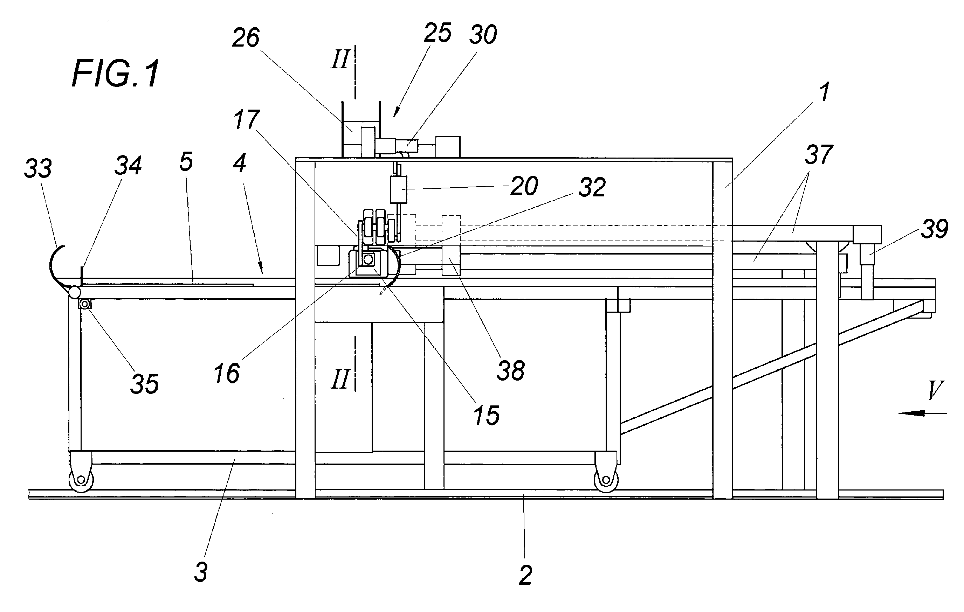

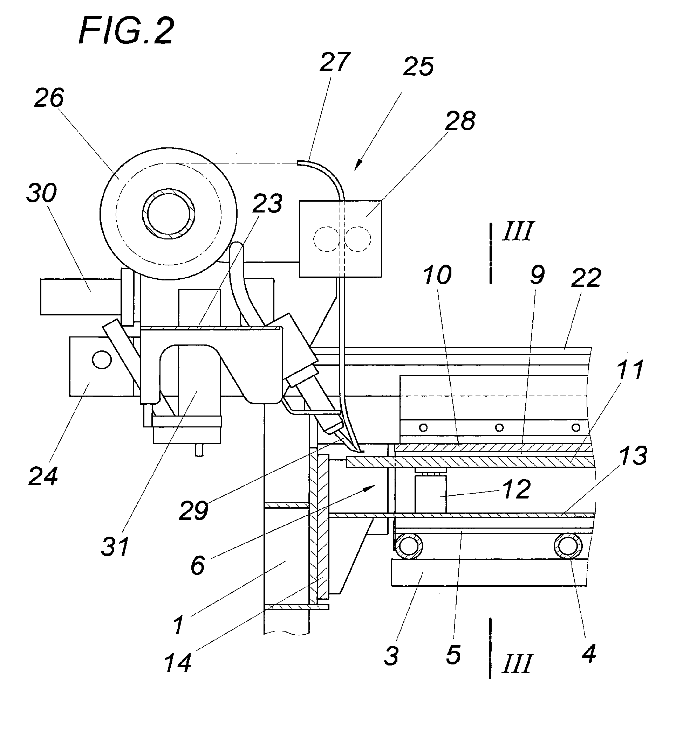

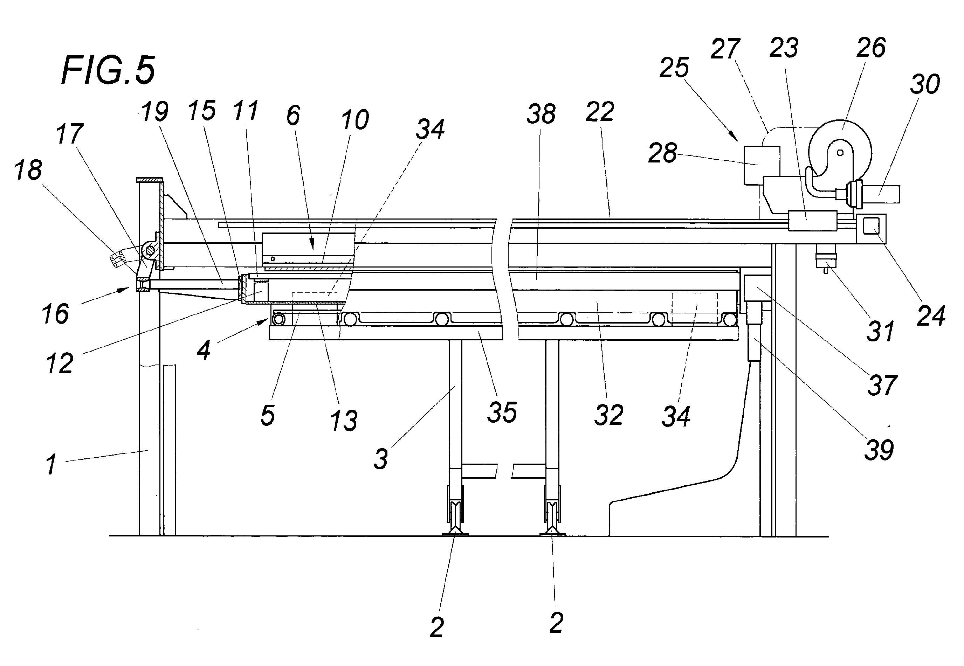

Die dargestellte Vorrichtung zum Schweißen einer rohrförmigen Auskleidung für ein Abwasserrohr weist ein feststehendes Gestell 1 und einen gegenüber diesem Gestell 1 auf Schienen 2 verfahrbaren Wagen 3 auf, der eine Aufnahme 4 für eine zu einem Rohr biegbare Kunststofftafel 5 bildet. Oberhalb der Aufnahme 4 des Wagens 3 für die Kunststofftafel 5 sind im Gestell 1 zwei Klemmeinrichtungen 6 und 7 für die aneinander stumpf stoßend gefügten Längsränder 8 und 9 der zu einem Rohr gebogenen Kunststofftafel 5 vorgesehen. Diese Klemmeinrichtungen 6, 7 weisen jeweils eine auf der Rohraußenseite vorgesehene, feststehende Klemmleiste 10 und eine mit diesen feststehenden Klemmleisten 10 zusammenwirkende bewegliche Klemmleiste 11 auf, die an einen Stelltrieb 12, beispielsweise in Form von über die Länge der beweglichen Klemmleiste 11 verteilten Stellzylindern, angeschlossen ist. Diese quer zu den Schienen 2 verlaufenden, beweglichen Klemmleisten 11 sind mit ihren Stelltrieben 12 auf einem im Querschnitt im Wesentlichen U-förmigen Träger 13 angeordnet, der gemäß der Fig. 2 über eine Konsole 14 starr mit dem Gestell 1 verbunden ist und gemäß der Fig. 5 mit seinem freien Ende 15 in einer Stützeinrichtung 16 lösbar gehalten wird. Diese Stützeinrichtung 16 weist einen Schwenkhebel 17 auf, der eine Lageraufnahme 18 für einen mit dem Trägerende 15 verbundenen Dorn 19 bildet. Über einen aus der Fig. 1 ersichtlichen Stellzylinder 20 kann der Schwenkhebel 17 aus der in Fig. 5 dargestellten Stützlage in eine vom Dorn 19 weggeschwenkte Offenstellung verschwenkt werden, wie dies strichpunktiert angedeutet ist.

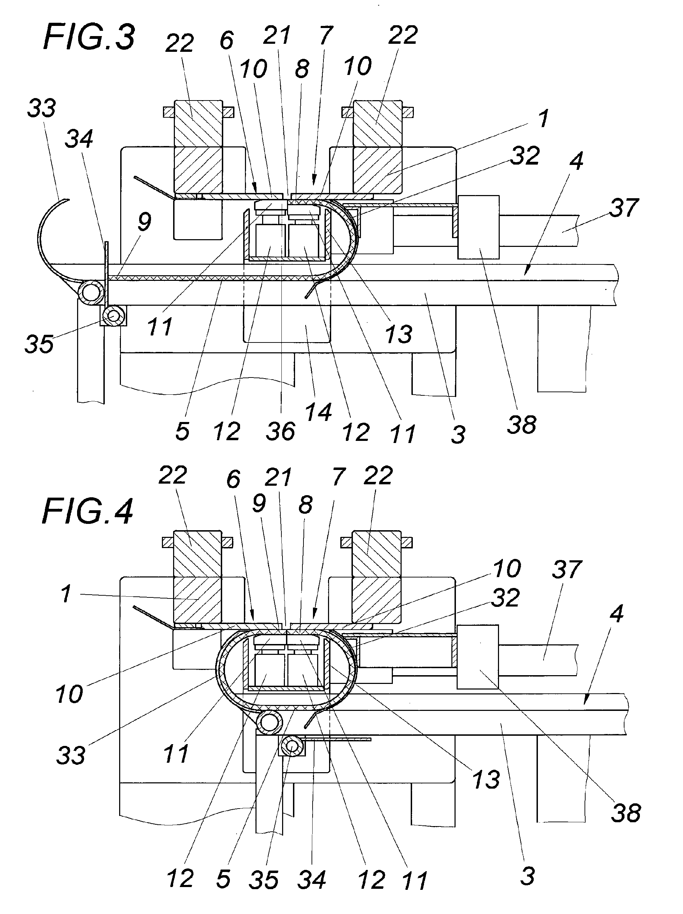

Die feststehenden Klemmleisten 10 der beiden Klemmeinrichtungen 6, 7 liegen einander unter Freilassung eines Spalts 21 gegenüber, wie dies den Fig. 3 und 4 entnommen werden kann. Parallel zum Spalt 21 und damit parallel zu den Klemmleisten 10 ist im Gestell 1 eine Führung 22 für einen Schlitten 23 vorgesehen, der mittels eines Motors 24 entlang der Führung 22 verfahren werden kann und eine Schweißeinrichtung 25 aufnimmt. Diese Schweißeinrichtung 25 umfasst in herkömmlicher Weise eine Vorratsspule 26 für einen Strang 27 aus einem Schweißmaterial, das der im Spalt 21 zwischen den beiden Klemmleisten 10 herzustellenden, die stumpf stoßenden Längsränder 8, 9 der zu einem Rohr gebogenen Kunststofftafel 5 miteinander verbindenden Schweißnaht über eine Abzieheinrichtung 28 zuzuführen ist. Die Wärmezufuhr erfolgt gemäß der Fig. 2 über eine Heißluftdüse 29, die an ein Heißluftgebläse 30 angeschlossen ist. Der Schweißeinrichtung 25 ist in Schweißrichtung eine Fräseinrichtung 31 mit einer entsprechenden Absaugeinrichtung für die Frässpäne vorgelagert, um gegebenenfalls im Bereich der auszubildenden Schweißnaht vorhandene, die Verbindung mit dem auszukleidenden Betonrohr unterstützende Oberflächenstrukturen abzufräsen, die die Schweißnahtausbildung behindern könnten. Außerdem kann die Fräseinrichtung 31 dazu benützt werden, die Schweißnaht durch eine Bearbeitung der aneinanderstoßenden Längsränder 8, 9 vorzubereiten, beispielsweise zur Ausbildung einer V-Naht.

Zum Einrollen der Kunststofftafel 5 zu einem Rohr sind den beiden Klemmeinrichtungen 6, 7 Umlenkführungen 32 und 33 zugeordnet. Während die eine Umlenkführung 32 dem Gestell 1 zugehört, ist die andere Umlenkführung 33 auf dem Wagen 3 vorgesehen und begrenzt die Aufnahme 4 für die Kunststofftafeln 5. Dieser Umlenkführung 33 ist in Verschieberichtung des Wagens 3 ein aus mehreren Anschlagplatten gebildeter Mitnehmeranschlag 34 vorgelagert, der gemäß dem dargestellten Ausführungsbeispiel mit Hilfe einer Betätigungswelle 35 aus einer Mitnehmerstellung nach Fig. 3 in eine Ruhestellung nach Fig. 4 verlagerbar ist.

Um eine auf der Aufnahme 4 des Wagens 3 abgelegte, rechteckige Kunststofftafel 5 zu einem Rohr zu biegen und anschließend die stumpf aneinanderstoßenden Längsränder 8, 9 der zu einem Rohr gebogenen Kunststofftafel 5 miteinander zu verschweißen, wird der Wagen 3 mit in die Mitnehmerstellung verschwenktem Mitnehmeranschlag 34 in das Gestell 1 eingefahren, wobei die Klemmeinrichtung 7 geöffnet und die Klemmeinrichtung 6 mit an die feststehende Klemmleiste 10 angestellter beweglicher Klemmleiste 11 geschlossen ist. Die eben auf der Auflage 4 des Wagens 3 aufliegende Kunststofftafel 5 wird somit über den Mitnehmeranschlag 34 durch den Wagen 3 gemäß der Fig. 1 gegen die dem Gestell 1 zugehörige Umlenkführung 32 gefördert, um entlang dieser Umlenkführung 32 um 180° eingerollt und mit ihrem Längsrand 8 durch die geöffnete Klemmeinrichtung 7 gegen die Klemmleiste 11 der geschlossenen Klemmeinrichtung 6 angedrückt zu werden, wie dies aus der Fig. 3 hervorgeht. Die Klemmleiste 11 der Klemmeinrichtung 7 bildet folglich in dieser Stellung einen Anschlag 36 zum Ausrichten des Längsrandes 8, der in dieser Anschlagstellung durch ein Schließen der Klemmeinrichtung 7 festgehalten werden kann.

Zum Einrollen des gegenüberliegenden Längsrandes 9 der Kunststofftafel 5 wird der Wagen 3 geringfügig zurückgefahren, damit Platz zum Verschwenken des Mitnehmeranschlags 34 in die Ruhestellung geschaffen wird, und dann wieder weiter in das Gestell 1 mit der Wirkung eingefahren, dass die in der Klemmeinrichtung 7 geklemmte, sich an der dem Gestell zugehörigen Umlenkführung 32 abstützende Kunststofftafel 5 mit ihrem Längsrand 9 in die Umlenkführung 33 des Wagens 3 eintritt und gegensinnig zum bereits eingerollten Längsrand 8 um 180° gebogen und gegen die zu diesem Zweck geöffnete Klemmeinrichtung 6 gefördert wird, bis der Längsrand 9 an den ausgerichtet festgehaltenen Längsrand 8 stumpf anstößt, sodass diese Fügestellung der stumpf stoßenden Längsränder 8, 9 durch ein Schließen der Klemmeinrichtung 6 für den nachfolgenden Schweißvorgang fixiert werden kann. Der Stoß zwischen den beiden Längsrändern 8, 9 der zu einem Rohr gebogenen Kunststofftafel verläuft mittig im Spalt 21 zwischen den beiden feststehenden Klemmleisten 11 der Klemmeinrichtungen 6, 7, was eine vorteilhaft Voraussetzung für eine genaue Schweißung darstellt, die mit Hilfe der Schweißeinrichtung 25 vorgenommen wird, wenn diese Schweißeinrichtung entlang ihrer Führung 22 und damit entlang der auszubildenden Schweißnaht verlagert wird.

Nach dem Verschweißen der stumpf stoßenden Längsränder 8, 9 der zu einem Rohr gebogenen Kunststofftafel 5 können die Klemmeinrichtungen 6, 7 zum Entnehmen der hergestellten rohrförmigen Auskleidung für ein Betonrohr geöffnet werden. Da die geschweißte Auskleidung jedoch nur in axialer Richtung von den beweglichen Klemmleisten 11 im Rohrinneren abgezogen werden kann, muss die Stützeinrichtung 16 durch eine Beaufschlagung des Stellzylinders 20 geöffnet werden, wobei die Lageraufnahme 18 entsprechend der Fig. 5 vom Dorn 19 am freien Ende 15 des Trägers 13 weggeschwenkt und das Trägerende 15 freigegeben wird, sodass die durch die geschweißte Kunststofftafel 5 gebildete, umfangsgeschlossene Auskleidung axial vom Träger 13 und den Klemmeinrichtungen 6, 7 abgezogen werden kann.

Wie sich aus der Fig. 4 ohne weiteres entnehmen lässt, ist die dem Wagen 3 zugehörige Umlenkführung 33 zum störungsfreien Einführen des Längsrandes 9 der Kunststofftafel 5 in die geöffnete Klemmeinrichtung 6 nahe an diese Klemmeinrichtung anzustellen. Dies bedeutet allerdings bei größeren Umfangslängen der herzustellenden rohrförmigen Auskleidungen, dass für die Kunststofftafel 5 ausreichend Raum geschaffen werden muss, der ja der Höhe nach durch den Wagen 3 selbst begrenzt wird. Aus diesem Grund kann die dem Gestell 1 zugehörige Umlenkführung 32 in Verschieberichtung des Wagens 3 im Gestell verschiebbar gelagert sein. Das Gestell 1 ist für diesen Fall mit einer Führung 37 versehen, die einen Schlitten 38 für die Umlenkführung 32 aufnimmt. Mit Hilfe eines Antriebs 39 kann somit der Schlitten 38 mit der Umlenkführung 32 den jeweiligen Anforderungen entsprechend verlagert werden.

## Patentansprüche

1. Vorrichtung zum Schweißen einer rohrförmigen Auskleidung eines Abwasserrohrs mit einer Halterung für die zu verschweißenden, stumpf stoßenden Längsränder (8, 9) einer zu einem Rohr gebogenen Kunststofftafel (5) und mit einer Schweißeinrichtung (25), **dadurch gekennzeichnet, dass** die Halterung für die beiden stumpf stoßenden Längsränder (8, 9) der Kunststofftafel (5) je eine Klemmeinrichtung (6, 7) aus einer feststehenden Klemmleiste (10) auf der Rohraußenseite und einer an einen Stelltrieb (12) angeschlossenen, beweglichen Klemmleiste (11) auf der Rohrinnenseite umfasst, dass die feststehenden Klemmleisten (10) einander bezüglich des Stoßes zwischen den beiden Längsrändern (8, 9) unter Freilassung eines Spaltes (21) gegenüberliegen, dass zumindest eine der beiden beweglichen Klemmleisten (11) in einer gegen die zugehörige feststehende Klemmleiste (10) angestellten Stellung einen Anschlag (36) für einen Längsrand (8) der Kunststofftafel (5) bildet und dass für die Schweißeinrichtung (25) eine Führung (22) entlang des Spaltes (21) zwischen den feststehenden Klemmleisten (10) vorgesehen ist.

2. Vorrichtung nach Anspruch 1, **dadurch gekennzeichnet, dass** die beweglichen Klemmleisten (11) mit ihren Stelltrieben (12) auf einem zu den feststehenden Klemmleisten (10) parallelen, frei auskragenden Träger (13) angeordnet sind.

3. Vorrichtung nach Anspruch 2, **dadurch gekennzeichnet, dass** für das freie Ende (15) des auskragenden Trägers (13) eine lösbare Stützeinrichtung (16) vorgesehen ist.

4. Vorrichtung nach einem der Ansprüche 1 bis 3, **dadurch gekennzeichnet, dass** den beiden Klemmeinrichtungen (6, 7) je eine Umlenkführung (32, 33) für die zu einem Rohr zu biegende Kunststofftafel (5) zugeordnet ist und dass die Umlenkführung (33), die der Klemmeinrichtung (6) mit dem Anschlag (36) für einen Längsrand (8) der Kunststofftafel (5) zugehört, auf einem quer zu den beiden Umlenkführungen (32, 33) verfahrbaren Wagen (3) vorgesehen ist, der einen der Umlenkführung (33) des Wagens (3) vorgelagerten, zwischen einer Ruhestellung und einer Mitnehmerstellung verlagerbaren Mitnehmeranschlag (34) für die Kunststofftafel (5) aufweist.

5. Vorrichtung nach Anspruch 4, **dadurch gekennzeichnet, dass** die der Umlenkführung (32) des Wagens (3) gegenüberliegende Umlenkführung (32) quer zur zugehörigen Klemmeinrichtung (7) verlagerbar ist.

6. Vorrichtung nach einem der Ansprüche 1 bis 5, **dadurch gekennzeichnet, dass** der Schweißeinrichtung (25) eine Fräseinrichtung (31) vorgeordnet ist.

## Claims

1. Apparatus for welding a tubular lining of a wastewater pipe, comprising a retainer for the butt-jointed longitudinal edges (8, 9), which are to be welded, of a synthetic material panel (5), which is bent to form a pipe, and comprising a welding device (25), **characterised in that** the retainer for the two butt-jointed longitudinal edges (8, 9) of the synthetic material panel (5) comprises a respective clamping device (6, 7) consisting of a stationary clamping strip (10) on the outer side of the pipe and a movable clamping strip (11), which is connected to an actuating drive (12), on the inner side of the pipe, **in that** the stationary clamping strips (10) are located opposite one another in relation to the joint between the two longitudinal edges (8, 9) with a gap (21) left open, **in that** at least one of the two movable clamping strips (11) forms a stop (36) for one longitudinal edge (8) of the synthetic material panel (5) in a position placed against the associated stationary clamping strip (10), and **in that** a guide (22) is provided along the gap (21) between the stationary clamping strips (10) for the welding device (25).

2. Apparatus as claimed in claim 1, **characterised in that** the movable clamping strips (11) are arranged with their actuating drives (12) on a freely protruding support (13) which is in parallel with the stationary clamping strips (10).

3. Apparatus as claimed in claim 2, **characterised in that** a releasable support device (16) is provided for the free end (15) of the protruding support (13).

4. Apparatus as claimed in any one of claims 1 to 3, **characterised in that** a respective deflection guide (32, 33) is allocated to the two clamping devices (6, 7) for the synthetic material panel (5) to be bent into a pipe, and **in that** the deflection guide (33), which is associated with the clamping device (6) with the stop (36) for a longitudinal edge (8) of the synthetic material panel (5), is provided on a carriage (3) which is displaceable transversely with respect to the two deflection guides (32, 33) and comprises a driver stop (34) for the synthetic material panel (5), which driver stop is provided upstream of the deflection guide (33) of the carriage (3) and is displaceable between an idle position and a driver position.

5. Apparatus as claimed in claim 4, **characterised in that** the deflection guide (32) which is located opposite the deflection guide (32) of the carriage (3) is displaceable transversely with respect to the associated clamping device (7).

6. Apparatus as claimed in any one of claims 1 to 5, **characterised in that** a milling device (31) is arranged upstream of the welding device (25).

## Revendications

1. Dispositif de soudage d'un revêtement tubulaire d'une conduite d'eaux usées comportant un élément de fixation pour les bords longitudinaux (8, 9), à souder bout à bout, d'une plaque en matière plastique (5) cintrée en forme de tube, et un système de soudage (25), **caractérisé en ce que** l'élément de fixation pour les deux bords longitudinaux (8, 9) bout à bout de la plaque en matière plastique (5) comporte un dispositif de serrage (6, 7) respectif composé d'une barre de serrage (10) fixe sur la face extérieure de la conduite et d'une barre de serrage (11) mobile, raccordée à un dispositif de réglage (12), sur la face intérieure de la conduite, **en ce que** les barres de serrage (10) fixes sont en regard l'une de l'autre en laissant une fente (21) par rapport à l'aboutement entre les deux bords longitudinaux (8, 9), **en ce qu'**au moins l'une des deux barres de serrage (11) mobiles forme, dans une position plaquée contre la barre de serrage (10) fixe associée, une butée (36) pour un bord longitudinal (8) de la plaque en matière plastique (5) et **en ce que** pour le système de soudage (25) un guidage (22) est prévu le long de la fente (21) entre les barres de serrage (10) fixes.

2. Dispositif selon la revendication 1, **caractérisé en ce que** les barres de serrage (11) mobiles sont agencées avec leurs dispositifs de réglage (12) sur un support (13) en saillie libre, parallèle aux barres de serrage (10) fixes.

3. Dispositif selon la revendication 2, **caractérisé en ce qu'**un dispositif d'appui (16) amovible est prévu pour l'extrémité (15) libre du support (13) en saillie.

4. Dispositif selon l'une quelconque des revendications 1 à 3, **caractérisé en ce qu'**un guidage de renvoi (32, 33) respectif pour la plaque en matière plastique (5) à cintrer en forme de tube est associé aux deux dispositifs de serrage (6, 7) et **en ce que** le guidage de renvoi (33), qui est associé au dispositif de serrage (6) avec la butée (36) pour un bord longitudinal (8) de la plaque en matière plastique (5), est prévu sur un chariot (3) déplaçable transversalement aux deux guidages de renvoi (32, 33), lequel chariot (3) présente une butée d'entraînement (34) logée en amont du guidage de renvoi (33) du chariot (3), déplaçable entre une position de repos et une position d'entraînement, pour la plaque en matière plastique (5).

5. Dispositif selon la revendication 4, **caractérisé en ce que** le guidage de renvoi (32) du chariot (3) en regard du guidage de renvoi (32) est déplaçable transversalement au dispositif de serrage (7) associé.

6. Dispositif selon l'une quelconque des revendications 1 à 5, **caractérisé en ce qu'**un système de fraisage (31) est agencé en amont du système de soudage (25).
